# EUROPÄISCHE PATENTSCHRIFT

(11) **EP 3 023 042 B1**
(45) Veröffentlichungstag und Bekanntmachung des Hinweises auf die Patenterteilung: **11.10.2017**
(21) Anmeldenummer: 15194696.9
(22) Anmeldetag: 16.11.2015
(51) Int. Cl.: A47J 43/07

(54) **KÜCHENGERÄT SOWIE DOSIERBEHÄLTER FÜR EIN KÜCHENGERÄT**
KITCHEN APPLIANCE AND DOSING CONTAINER FOR A KITCHEN APPLIANCE
APPAREIL DE CUISINE ET RECIPIENT DE DOSAGE POUR UN APPAREIL DE CUISINE

(30) Priorität: 20.11.2014 DE 102014223715
(43) Veröffentlichungstag der Anmeldung: 25.05.2016
(73) Patentinhaber: BSH Hausgeräte GmbH, 81739 München (DE)
(72) Erfinder: Zilnik, Marko, 1218 Komenda (SI); Uplaznik, Marko, 3312 Prebold (SI); Orbanic, Henri, 1000 Ljubljana (SI)

(56) Entgegenhaltungen:
- DE-A1- 4 401 925
- DE-A1-102010 017 387
- DE-A1-102011 052 972
- DE-U1- 9 407 049
- DE-U1-202012 100 743

## Beschreibung

### Gebiet der Erfindung

Die Erfindung betrifft ein Küchengerät, insbesondere eine Küchenmaschine oder einen Standmixer, mit einem Bearbeitungsbehälter zum Aufnehmen eines Bearbeitungsguts und mit mindestens einem in diesem angeordneten Bearbeitungswerkzeug, wobei der Bearbeitungsbehälter eine Zuführöffnung zum Zuführen von Bearbeitungsgut in den Bearbeitungsbehälter aufweist. Die Erfindung betrifft auch einen Dosierbehälter für ein Küchengerät.

### Hintergrund der Erfindung

Die Patentschrift DE 30 07 915 C2 offenbart eine Küchenmaschine, die einen als Napf ausgebildeten Bearbeitungsbehälter besitzt mit einer sich in diesen erstreckenden, von einem Motor angetriebenen Welle, auf der verschiedene rotierende Nahrungsmittel-Bearbeitungswerkzeuge angeordnet werden können. Ein Deckel des Napfs weist einen Zuführungsstutzen auf mit einer Öffnung, die sich nach unten durch den Deckel in den oberen Bereich des Napfs erstreckt. Die zu verarbeitenden Nahrungsgegenstände werden in den Zuführungsstutzen eingelegt und sodann von Hand mittels eines entfernbaren Stößels nach unten in den Napf gestoßen.

Aus der Offenlegungsschrift DE 10 2011 087 527 A1 ist ein Aufsatz für eine Schüssel einer Küchenmaschine bekannt, der eine Öffnung für ein Einfüllen von Nahrungsmitteln und einen Antrieb aufweist und durch den während des Betriebs Nahrungsmittel in die Schüssel gelangen können. Dabei kann ein Werkzeug, mit dem ein Nahrungsmittel verarbeitet wird, Bestandteil eines Anbauteils sein, welches während des Betriebs auf den Aufsatz aufgesetzt ist. Der Aufsatz kann auf den oberen Rand der Schüssel aufgesetzt und mittels einer Fixiereinrichtung fest mit der Schüssel verbunden werden.

Aus der Gebrauchsmusterschrift DE 20 2012 100 743 U1 ist eine elektromotorisch angetriebene Küchenmaschine mit einem Rührgefäß und einem Deckel für das Rührgefäß bekannt, bei dem der Deckel eine Durchgangsöffnung aufweist und der Durchgangsöffnung ein Abdeckteil zuordenbar ist, wobei das Abdeckteil die Durchgangsöffnung vollständig überdeckt. Zum Zugeben insbesondere von flüssigen oder zähflüssigen Zutaten während eines Zubereitungsvorgangs ist das Abdeckteil weiter mit einem Zuführteil versehbar. Eine Zuführung von Zutaten ist auch bei Anordnung des Abdeckteils auf dem Deckel über einen darin enthaltenen Dosiertopf möglich, der in seinem Boden eine Öffnung aufweist.

Aus der Gebrauchsmusterschrift DE 20 2007 013 978 U1 ist einen Mixbehälter für eine Zubereitung von Getränken aus Flüssigkeit und Pulver bekannt. Der Becher umfasst zwei Kammern, die über eine Klappe voneinander getrennt sind. Der Getränkemix wird zubereitet, indem durch Öffnen der Klappe ein Hineinströmen von Pulver in die Flüssigkeit ermöglicht wird. Durch Bedienen der Klappe kann die Menge des Pulvers, das in die Flüssigkeit strömt, gezielt dosiert werden.

Bei der Herstellung bestimmter Lebensmittel mit einem gattungsgemäßen Küchengerät, etwa bei der Herstellung von Mayonnaise, kann es erforderlich sein, während des Herstellungsprozesses Flüssigkeit in den Bearbeitungsgehälter zuzuführen, beispielsweise um diese mit den bereits im Bearbeitungsbehälter vorhandenen Bestandteilen des herzustellenden Lebensmittels zu vermischen. Insbesondere kann es dabei erforderlich sein, die Flüssigkeit während des Herstellungsprozesses in dosierter Weise zuzuführen. Die dosierte Zuführung von Flüssigkeiten durch einen Benutzer erfordert jedoch ein hohes Maß an Aufmerksamkeit des Benutzers und ist zudem mit Ungenauigkeiten verbunden, so dass die Flüssigkeit möglicherweise zu rasch, zu spät oder auch in ungenügender Menge dem Bearbeitungsgut zugeführt wird und das hergestellte Lebensmittel daher nicht die erwünschte Konsistenz und/oder Zusammensetzung aufweist.

### Der Ereindung zugrundeliegende Aufgabe

Es ist Aufgabe der vorliegenden Erfindung, ein Küchengerät der eingangs genannten Art anzugeben, das hinsichtlich der Zuführung von Flüssigkeit in den Bearbeitungsbehälter verbessert ist, insbesondere bei dem eine dosierte Zuführung einer Flüssigkeit in den Bearbeitungsbehälter erleichtert ist. Weiter ist es Aufgabe der vorliegenden Erfindung, einen Dosierbehälter für ein derartiges Küchengerät anzugeben.

### Erfindungsgemäße Lösung

Die Bezugszeichen in sämtlichen Ansprüchen haben keine einschränkende Wirkung, sondern sollen lediglich deren Lesbarkeit verbessern.
Die Lösung der gestellten Aufgabe gelingt durch ein Küchengerät mit den Merkmalen des Anspruchs 1 sowie durch einen Dosierbehälter mit den Merkmalen des Anspruchs 11. Ein erfindungsgemäßes Küchengerät ist vorzugsweise elektromotorisch antreibbar und ist insbesondere als Küchenmaschine oder Standmixer ausgebildet. Das Küchengerät weist einen Bearbeitungsbehälter zum Aufnehmen eines Bearbeitungsguts und mindestens ein innerhalb des Bearbeitungsbehälters angeordnetes Bearbeitungswerkzeug auf. Das Bearbeitungsgut ist insbesondere ein Lebensmittel, und das Bearbeitungswerkzeug ist insbesondere zum Kneten, Rühren, Raspeln, Mahlen, Zerkleinern, Pürieren oder Mischen des Lebensmittels ausgebildet. Das Bearbeitungswerkzeug ist vorzugsweise elektromotorisch antreibbar und ist in dem Bearbeitungsbehälter derart angeordnet bzw. greift in den Bearbeitungsbehälter derart ein, dass in dem Bearbeitungsbehälter aufgenommenes Bearbeitungsgut bearbeitet wird. Das Bearbeitungswerkzeug kann von einem Antrieb des Küchengeräts trennbar ausgebildet bzw. wechselbar sein, so dass das Küchengerät mit unterschiedlichen Bearbeitungswerkzeugen für unterschiedliche Bearbeitungszwecke versehen werden kann. Der Bearbeitungsbehälter kann von einer Antriebseinheit des Küchengeräts trennbar ausgebildet sein.
Der Bearbeitungsbehälter weist eine Zuführöffnung auf zum Zuführen des zu bearbeitenden Bearbeitungsguts, insbesondere des zu bearbeitenden Lebensmittels oder eines Bestandteils eines herzustellenden Lebensmittels, in den Bearbeitungsbehälter. Die Zuführöffnung kann insbesondere in einem oberen Bereich oder in einem Deckel des Bearbeitungsbehälters vorgesehen sein, der auf den Bearbeitungsbehälter aufsetzbar und mit dem dieser verschließbar ist. An der Zuführöffnung kann ein nach oben gerichteter Zuführschacht vorgesehen sein, der das Zuführen des Bearbeitungsguts erleichtert. Das zugeführte Bearbeitungsgut bzw. der zugeführte Bestandteil des Lebensmittels gelangt vorzugsweise durch Schwerkraftwirkung in das Innere des Bearbeitungsbehälters und in den Wirkungsbereich des Bearbeitungswerkzeugs.

Das Küchengerät umfasst einen an die Zuführöffnung anschließbaren Dosierbehälter zum dosierbaren Zuführen einer Flüssigkeit in den Bearbeitungsbehälter, insbesondere eines flüssigen Lebensmittels wie Öl oder Wasser. Der Dosierbehälter kann mit der zuzuführenden Flüssigkeit gefüllt werden, die sodann dosiert, d.h. insbesondere allmählich und/oder in kontrollierbarer Menge, in den Bearbeitungsbehälter eingelassen werden kann. Der Dosierbehälter kann einen Bodenbereich und einen Wandbereich aufweisen, wobei am Wandbereich ein Handgriff oder beispielsweise ein nach außen erweiterter Rand vorgesehen sein kann, um den Dosierbehälter auch unabhängig von dem Bearbeitungsbehälter handhaben zu können. Der Dosierbehälter kann selbst durch einen Deckel verschließbar sein.

Dadurch, dass das Küchengerät einen Dosierbehälter umfasst, mit dem eine Flüssigkeit dosierbar in den Bearbeitungsbehälter eingeleitet werden kann, wird es einem Benutzer des Küchengeräts erleichtert, die Flüssigkeit in einer gewünschten Menge, mit einer gewünschten Flussrate und in einem gewünschten Zeitraum in den Bearbeitungsbehälter einzuleiten. Hierdurch kann auf einfache Weise die Handhabbarkeit des Küchengeräts hinsichtlich der Zuführung einer Flüssigkeit beim Bearbeitungsprozess verbessert werden. Insbesondere kann es hierdurch ermöglicht werden, die Flüssigkeit während eines Bearbeitungsprozesses allmählich in den Bearbeitungsbehälter einzuleiten und diese somit während der Bearbeitung des Bearbeitungsguts diesem allmählich zuzusetzen. Dies kann bei der Zubereitung von Lebensmitteln, die durch Mischen unterschiedlicher flüssiger Bestandteile oder fester Bestandteile mit flüssigen Bestandteilen hergestellt werden, wie etwa Mayonnaise oder bestimmten Brotaufstrichen, von besonderem Vorteil sein.

Der Dosierbehälter weist in einem Bodenbereich eine als Durchgangsöffnung ausgebildete Dosieröffnung auf, die zum Zulassen eines begrenzten, insbesondere eines vorbestimmbaren oder kontrollierbaren Durchflusses der Flüssigkeit ausgebildet, insbesondere dimensioniert ist. Hierdurch kann auf einfache Weise eine genauer dosierbare Zuführung der Flüssigkeit in den Bearbeitungsbehälter erreichbar sein. Insbesondere kann die Dosieröffnung derart dimensioniert sein, dass für eine bestimmte Flüssigkeit ein für einen bestimmten Bearbeitungsprozess geeigneter Durchstrom von Flüssigkeit durch die Dosieröffnung ermöglicht wird. Die Ausgestaltung der Dosieröffnung kann von der Art der zuzuführenden Flüssigkeit, etwa Wasser oder Öl, von der Menge der zuzuführenden Flüssigkeit, und von dem betreffenden Bearbeitungsprozess, etwa der Herstellung von Mayonnaise oder Brotaufstrich, abhängig sein. Hierdurch kann eine für eine jeweilige Anwendung optimierte Zuführung von Flüssigkeit erreichbar sein.

Die Dosieröffnung ist mit einer verschiebbaren Lasche verschließbar. Insbesondere kann die Dosieröffnung durch Verschieben der Lasche in einer Richtung verschlossen werden und durch Verschieben der Lasche in der Gegenrichtung geöffnet werden. Hierdurch ist auf besonders einfache Weise eine genaue Dosierung der zuzuführenden Flüssigkeit erreichbar.

Erfindungsgemäß ist die verschiebbare Lasche flexibel ausgebildet und zwischen zwei parallel zueinander angeordneten Schienen verschiebbar geführt, so dass die Dosieröffnung wahlweise geöffnet oder verschlossen oder auch teilweise geöffnet bzw. verschlossen werden kann. Die Schienen verlaufen insbesondere an einer Außenseite eines Wandbereichs und einer Unterseite des Bodenbereichs des Dosierbehälters, wobei ein Übergang zwischen dem Wandbereich und dem Bodenbereich abgerundet ausgebildet ist. Hierdurch wird es insbesondere ermöglicht, dass ein unterer Endabschnitt der flexiblen Lasche aus dem Wandbereich in den Bodenbereich und umgekehrt verschoben werden kann, um die Dosieröffnung mit dem unteren Endabschnitt der Lasche zu verschließen bzw. zu öffnen, wobei eine Betätigung der flexiblen Lasche über einen im Wandbereich des Dosierbehälters angeordneten oberen Endabschnitt der Lasche möglich ist. Hierdurch sind auf einfache Weise ein manuelles Öffnen und Verschließen der Dosieröffnung und damit eine besonders einfache Handhabung des Dosierbehälters zum dosierten Zuführen der Flüssigkeit in den Bearbeitungsbehälter erreichbar.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Vorzugsweise ist der Dosierbehälter zum Einsetzen in die Zuführöffnung des Bearbeitungsbehälters, insbesondere zum Einsetzen in einen Zuführschacht, und somit als Dosiereinsatz ausgebildet. Ist der Dosierbehälter in die Zuführöffnung bzw. in den Zuführschacht eingesetzt, so kann auf besonders sichere Weise eine Zuführung der zuzuführenden Flüssigkeit direkt in das bearbeitete Lebensmittel erreichbar sein, ohne dass die Flüssigkeit weitere Teile des Bearbeitungsbehälters benetzt. Hiermit ist eine weitgehend vollständige und besonders gut dosierbare Zuführung der Flüssigkeit in das Bearbeitungsgut erreichbar. Alternativ kann der Dosierbehälter auf den Bearbeitungsbehälter aufsetzbar sein, wobei die zuzuführende Flüssigkeit ebenfalls durch die Zuführöffnung in den Bearbeitungsbehälter gelangt. In diesen Fall ist der Bearbeitungsbehälter als Dosieraufsatz ausgebildet. Vorzugsweise ist der Dosierbehälter einrastbar mit dem Bearbeitungsbehälter verbindbar, wofür der Dosierbehälter beispielsweise in einem unteren oder einem oberen Bereich einen nach außen abstehenden Rand oder nach außen abstehende Rastelemente aufweisen kann, die in entsprechende Rastausnehmungen der Zuführöffnung bzw. des Zuführschachts des Bearbeitungsbehälters eingesetzt werden können. Hierdurch ist der Dosierbehälter fest an dem Bearbeitungsbehälter befestigbar, wodurch die Sicherheit und die Handhabbarkeit des Küchengeräts verbessert werden können.

Vorzugsweise weist der Bearbeitungsbehälter einen Deckel auf, der den Bearbeitungsbehälter nach oben abschließt und der die Zuführöffnung bzw. den Zuführschacht aufweist, wobei der Dosierbehälter an dem Deckel befestigt werden kann, indem der Dosierbehälter in die Zuführöffnung bzw. den Zuführschacht eingesetzt oder auf den Deckel im Bereich der Zuführöffnung aufgesetzt wird. Dadurch, dass der Dosierbehälter als Dosiereinsatz bzw. Dosieraufsatz ausgebildet ist, der in die Zuführöffnung bzw. den Zuführschacht des Deckels eingesetzt oder auf den Deckel aufgesetzt wird, kann die Schwerkraftwirkung zum Zuführen der Flüssigkeit in den Bearbeitungsbehälter, der bei der Verwendung üblicherweise aufrecht steht und im oberen Bereich durch den Deckel verschlossen wird, genutzt werden. Gleichzeitig kann dadurch die Wirkung des Deckels, den Bearbeitungsbehälter abzuschließen und ein Austreten von Bearbeitungsgut zu verhindern, genutzt werden, so dass in einfacher und sicherer Weise ein Zuführen von Flüssigkeit während des Bearbeitungsprozesses ermöglicht werden kann.

In besonders vorteilhafter Weise ist die Dosieröffnung ein- oder beidseitig trichterförmig ausgebildet mit einer Verengung zum Begrenzen des Durchflusses der Flüssigkeit. Hierdurch ist eine weiter verbesserte Dosierbarkeit der zugeführten Flüssigkeit erreichbar.

Vorzugsweise ist die Dosieröffnung verschließbar ausgebildet, insbesondere manuell verschließbar. Dadurch, dass die Dosieröffnung verschließbar ist, ist eine besonders genaue und an den Fortschritt des Bearbeitungsprozesses des Bearbeitungsguts anpassbare Zuführung der Flüssigkeit zu dem Bearbeitungsgut erzielbar.

Vorzugsweise erstreckt sich die Lasche bis in einen oberen Teil des Wandbereichs des Bearbeitungsbehälters und ist dort mit einem Griff versehen. Der Griff kann beispielsweise ein nach außen abgewinkeltes Ende des oberen Endabschnitts der Lasche sein, das mit zwei Fingern ergriffen und nach oben oder unten bewegt werden kann, wodurch die Lasche zum Öffnen bzw. Verschließen der Dosieröffnung verschoben werden kann. Hierdurch wird die Bedienbarkeit des Dosierbehälters weiter verbessert.

In besonders vorteilhafter Weise ist die Lasche derart geführt, dass sie zumindest im Bereich der Dosieröffnung dicht an der Unterseite des Bodenbereichs anliegt. Hierdurch kann ein dichter Verschluss der Dosieröffnung gewährleistet werden, wodurch die Dosierbarkeit der Flüssigkeitszuführung, insbesondere die Zuführbarkeit nur zu einem gewünschten Zeitpunkt, weiter verbessert werden kann.

Insbesondere kann die Lasche elastisch vorgespannt gegen die Unterseite des Bodenbereichs des Dosierbehälters ausgebildet und geführt sein, insbesondere im Bereich der Dosieröffnung. Hierdurch wird ein dichter Verschluss der Dosieröffnung verbessert und eine Zuführung von Flüssigkeit in solchen Zeitpunkten, zu denen keine Zuführung der Flüssigkeit in den Bearbeitungsbehälter gewünscht ist, beispielsweise vor Beginn des Bearbeitungsprozesses, sicher vermieden. Ferner kann durch die auf diese Weise erzielte Reibung die Lasche in einer gewählten Stellung, in der die Dosieröffnung ganz oder teilweise geöffnet bzw. verschlossen ist, gehalten werden. Alternativ oder zusätzlich kann eine die Dosieröffnung mit einer unterseitigen Dichtung versehen sein.

In vorteilhafter Weise ist die Lasche entnehmbar, etwa durch Herausziehen aus den Führungsschlitzen der Schienen. Hierdurch wird eine einfache Reinigung des Dosierbehälters und der Lasche ermöglicht.

Gemäß einer bevorzugten Ausführungsform der Erfindung ist der Wandbereich des Dosierbehälters zumindest teilweise transparent ausgebildet und mit einer Messskala versehen. Hierdurch wird einem Benutzer die dosierte Zuführung einer vorbestimmten Menge der Flüssigkeit weiter erleichtert.

Ein erfindungsgemäßer Dosierbehälter für ein Küchengerät, das insbesondere als Küchenmaschine oder Standmixer ausgebildet ist und einen Bearbeitungsbehälter zum Aufnehmen eines Bearbeitungsguts und mindestens ein in diesem angeordnetes Bearbeitungswerkzeug aufweist, wobei der Bearbeitungsbehälter eine Zuführöffnung aufweist zum Zuführen von Bearbeitungsgut in den Bearbeitungsbehälter, ist zum Anschließen an, insbesondere zum Einsetzen in die Zuführöffnung bzw. in einen an der Zuführöffnung vorgesehenen Zuführschacht des Bearbeitungsbehälters und zum dosierbaren Zuführen einer Flüssigkeit in den Bearbeitungsbehälter ausgebildet. Vorzugsweise ist ein erfindungsgemäßer Dosierbehälter wie der Dosierbehälter des zuvor beschriebenen Küchengeräts ausgebildet.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: ein Küchengerät gemäß einem Ausführungsbeispiel der Erfindung in einer geschnittenen Teilansicht;
- Fig. 2: den Dosierbehälter des Küchengeräts gemäß Fig. 1 in einer vergrößerten Ansicht mit verschlossener Dosieröffnung;
- Fig. 3: den Dosierbehälter des Küchengeräts gemäß Fig. 1 in einer vergrößerten Ansicht mit geöffneter Dosieröffnung;
- Fig. 4: das Küchengerät gemäß Fig. 1 in einem Teilschnitt mit eingesetztem Dosierbehälter mit geschlossener Dosieröffnung;
und schließlich
- Fig. 5: das Küchengerät gemäß Fig. 1 in einem Teilschnitt mit eingesetztem Dosierbehälter mit geöffneter Dosieröffnung.

### Ausführliche Beschreibung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten. Der Übersichtlichkeit halber sind nicht in allen Figuren alle Bezugszeichen dargestellt.

Ein als Küchenmaschine 1 ausgebildetes Küchengerät umfasst gemäß dem in den Figuren dargestellten Ausführungsbeispiel der Erfindung eine Antriebseinheit 2 mit einer Stellfläche 3, auf die ein Bearbeitungsbehälter 4 aufsetzbar ist. Der Bearbeitungsbehälter 4 weist eine Wand 5 und einen Boden 6 auf und ist mit einem unteren Rand der Wand 5 auf die Stellfläche 3 aufsetzbar. Weiter umfasst der Bearbeitungsbehälter 4 einen Deckel 7, der in einen oberen Randbereich 8 der Wand 5 einsetzbar ist und mit dem der Bearbeitungsbehälter 4 verschlossen werden kann. Ferner ist ein Handgriff 9 vorgesehen, um den Bearbeitungsbehälter leichter handhaben zu können. Im Inneren des Bearbeitungsbehälters 4 ist mindestens ein Bearbeitungswerkzeug angeordnet, beispielsweise ein Mischwerkzeug 10, das vom Antrieb der Küchenmaschine 1 zum Bearbeiten von in dem Bearbeitungsbehälter 4 befindlichem, in den Figuren nicht dargestelltem Bearbeitungsgut angetrieben werden kann.

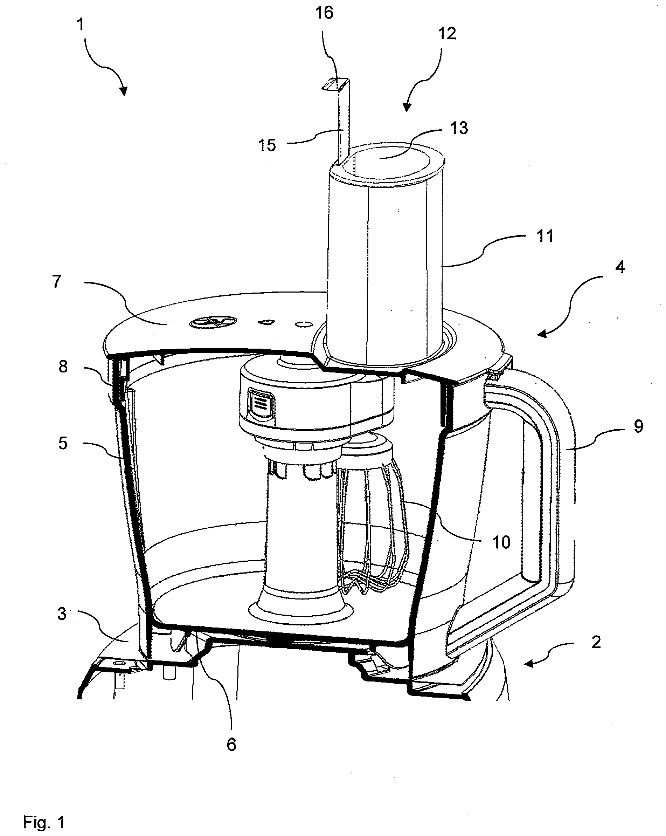

Wie in Fig. 1 gezeigt, weist der Deckel 7 einen nach oben gerichteten Zuführschacht 11 auf, dessen unterer Bereich eine Zuführöffnung des Bearbeitungsbehälters 4 bildet oder eine solche umgibt. In den Zuführschacht 11 ist ein als Dosiereinsatz 12 ausgebildeter Dosierbehälter eingesetzt. Der Dosiereinsatz 12 umfasst eine Wand 13 und eine zum Verschließen einer in Fig. 1 nicht gezeigten Dosieröffnung verschiebbar geführte Lasche 15. Die Lasche 15 weist einen Griff 16 auf, mit dem diese zum Öffnen und Verschließen der Dosieröffnung verschoben werden kann. Der Dosiereinsatz 12 ist nach oben offen und kann mit einer Flüssigkeit gefüllt werden, die beim Bearbeiten des in dem Bearbeitungsbehälter 12 aufgenommenen Bearbeitungsguts in dieses hinzu dosiert werden kann.

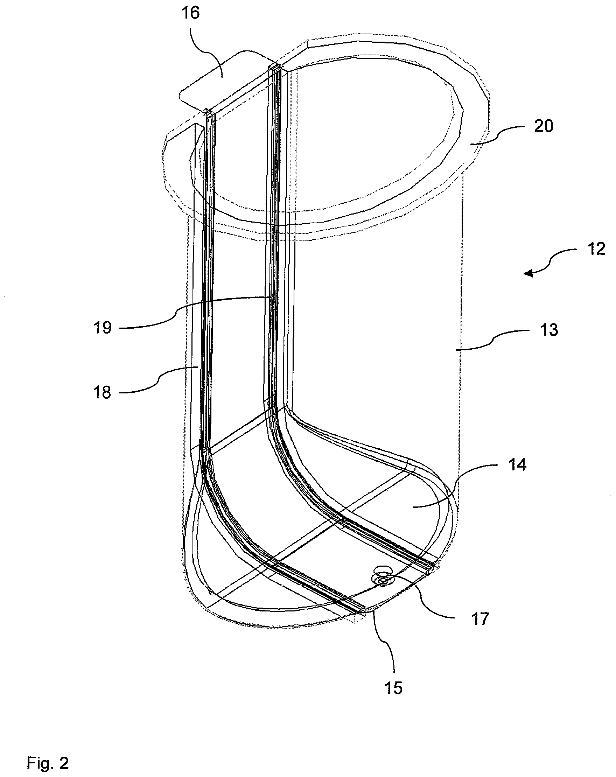

Wie in der vergrößerten Darstellung der Fig. 2 gezeigt, ist im Boden 14 des Dosiereinsatzes 12 eine von beiden Seiten trichterförmig ausgebildete Dosieröffnung 17 angeordnet, die als Durchgangsöffnung ausgebildet ist und einen Durchfluss von im Inneren des Dosiereinsatzes 12 befindlicher Flüssigkeit mit einer durch die Dimensionierung der Öffnung und die Viskosität der Flüssigkeit bestimmten, begrenzten Durchflussmenge gestattet. Der Durchfluss erfolgt unter der Wirkung der Schwerkraft und ist daher in der Regel auch von der Menge der im Inneren des Dosiereinsatzes 12 befindlichen Flüssigkeit und deren Dichte abhängig.

An der Wand 13 durchgehend bis an die Unterseite des Bodens 14 des Dosiereinsatzes 12 sind zwei parallel zueinander verlaufende, an ihren einander zuwandten Seiten jeweils einen Führungsschlitz aufweisende Schienen 18, 19 angeordnet, zwischen denen die flexible Lasche 15 in den Führungsschlitzen geführt ist. In der in Fig. 2 gezeigten Stellung ist die Lasche 15 bis unter den die Dosieröffnung 17 umfassenden Boden 14 des Dosiereinsatzes 12 geschoben und verschließt mit ihrem unteren Endabschnitt die Dosieröffnung 17 unterseitig flüssigkeitsdicht. Der Griff 16, der am oberen Endabschnitt der Lasche 15 angeordnet ist, befindet sich dabei in seiner unteren Position. Der Dosiereinsatz 12 weist an dem oberen Bereich der Wand 13 einen nach außen gerichteten Rand 20 auf, der die Handhabung des Dosiereinsatzes 12 erleichtert und mit dem der Dosiereinsatz 12 im Zuführschacht 11 des Deckels 7 gehalten werden kann (s. Fig. 1).

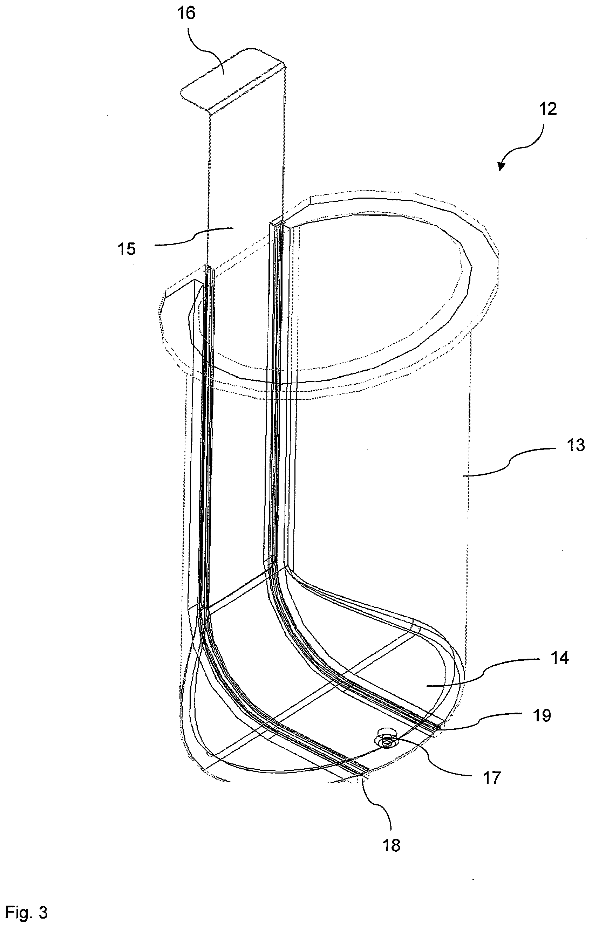

In der in Fig. 3 gezeigten Position ist der untere Endabschnitt der Lasche 15 mittels des Griffs 16 vom Boden 14 bis in den Wandbereich 13 gezogen worden. Hierdurch ist die Dosieröffnung 17 freigegeben worden, so dass in dem Dosiereinsatz 12 befindliche Flüssigkeit (in Fig. 2 und 3 nicht gezeigt) unter der Wirkung der Schwerkraft durch die Dosieröffnung 17 mit einer begrenzten Durchflussrate hindurchströmen kann.

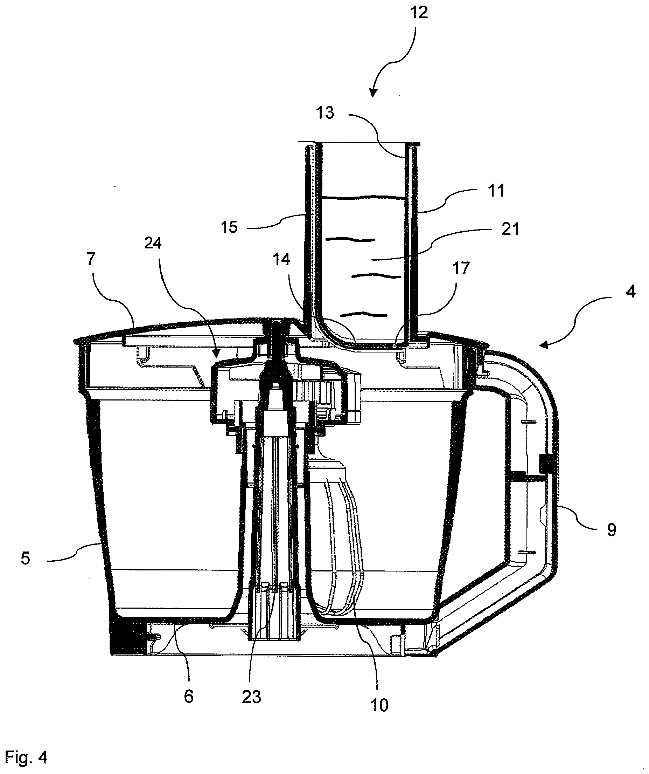

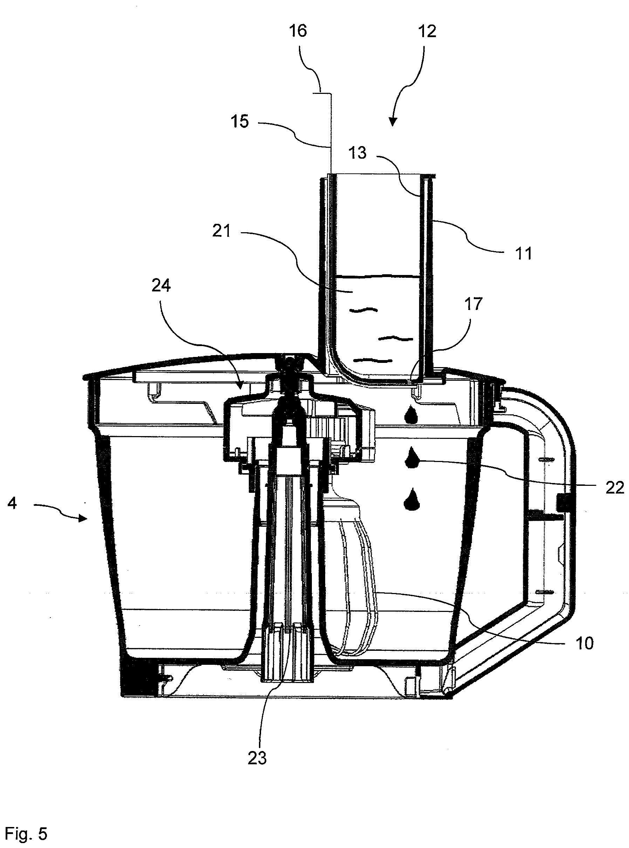

Dies ist in Fig. 4 und 5 in einer Schnittansicht gezeigt. Der in den Zuführschacht 11 des Deckels 7 eingesetzte Dosiereinsatz 12 ist mit einer Flüssigkeit 21 gefüllt, die in der in Fig. 4 gezeigten unteren Stellung der Lasche 15 nicht durch die Dosieröffnung 17 hindurchtreten kann, da diese durch den unteren Endabschnitt der Lasche 15 verschlossen wird. In der in Fig. 5 gezeigten oberen Stellung der Lasche 15 gibt diese die Dosieröffnung 17 frei, so dass die Flüssigkeit in kontrollierbarer Weise durch die Dosieröffnung 17 hindurchtreten kann und durch die Zuführöffnung des Deckels 7 in das Innere des Bearbeitungsbehälters 4 gelangt, wie durch die Tropfen 22 angedeutet ist. Hierdurch kann eine Flüssigkeitszugabe zu dem Bearbeitungsgut, das mit dem Mischwerkzeug 10 bearbeitet wird, in der gewünschten Menge und zum gewünschten Zeitpunkt erfolgen.

In Fig. 4 und 5 ist ferner eine Antriebswelle 23 gezeigt, mit der das Mischwerkzeug 10 gekoppelt ist und die von einem nicht dargestellten Elektromotor der Küchenmaschine 1 angetrieben werden kann. Die Antriebswelle 23 ragt aus der Stellfläche 3 (s. Fig. 1) von unten in den Bearbeitungsbehälter 4 hinein. Im oberen Bereich des Bearbeitungsbehälters 4 ist das Mischwerkzeug 10 über einen Kopplungsmechanismus 24 mit der Antriebswelle 23 gekoppelt und von dieser antreibbar. Die Wand 13 des Dosierbehälters 12 und der Zuführschacht 11 können zumindest teilweise transparent ausgebildet und die Wand 13 oder der Zuführschacht 11 mit einer in den Figuren nicht dargestellten Messskala versehen sein, um die Bemessung der Menge der zuzuführenden Flüssigkeit 21 und die Ermittlung der bereits zugeführte Flüssigkeitsmenge zu erleichtern.

Zur Durchführung eines Bearbeitungsprozesses mit der Küchenmaschine 1, etwa zur Herstellung eines Lebensmittels wie beispielsweise Mayonnaise, wird der Dosiereinsatz 12 nach dem Füllen des Bearbeitungsbehälters 4 mit den übrigen Bestandteilen des herzustellenden Lebensmittels und dem Aufsetzen des Deckels 7 auf den Bearbeitungsbehälter 4 in den Zuführschacht 11 des Deckels 7 eingesetzt. Nachdem die Dosieröffnung 17 durch Verschieben der Lasche 15 in die untere Endposition verschlossen worden ist, wird der Dosiereinsatz 12 mit der zuzuführenden Flüssigkeit 21, beispielsweise Öl, in der benötigten Menge gefüllt. Sodann wird die Küchenmaschine 1 in Betrieb genommen, so dass das Mischwerkzeug 10 die im Bearbeitungsbehälter 4 befindlichen Bestandteile des Lebensmittels durchmischt. Nach einigen Sekunden wird die Lasche 15 mit dem Griff 16 in die obere Endposition gezogen, so dass die Dosieröffnung 17 freigegeben wird. Diese ist so bemessen, dass die zuzuführende Flüssigkeit 21 mit einer geeigneten Flussrate in den Bearbeitungsbehälter 4 einströmt und von dem Mischwerkzeug 10 mit dem Bearbeitungsgut vermischt werden kann. Kurze Zeit, nachdem sich der Dosiereinsatz 12 geleert hat, ist der Bearbeitungsprozess beendet, und die Küchenmaschine 1 kann abgeschaltet werden. Auf diese Weise kann ein zu rasches oder zu langsames sowie auch ein unvollständiges Zuführen von Flüssigkeit zum Bearbeitungsgut vermieden werden. Ferner ist kein wiederholtes Zuführen von Flüssigkeit sowie kein Anhalten der Küchenmaschine erforderlich.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Küchenmaschine
- 2: Antriebseinheit
- 3: Stellfläche
- 4: Bearbeitungsbehälter
- 5: Wand
- 6: Boden
- 7: Deckel
- 8: Randbereich
- 9: Handgriff
- 10: Mischwerkzeug
- 11: Zuführschacht
- 12: Dosiereinsatz
- 13: Wand
- 14: Boden
- 15: Lasche
- 16: Griff
- 17: Dosieröffnung
- 18: Schiene
- 19: Schiene
- 20: Rand
- 21: Flüssigkeit
- 22: Tropfen
- 23: Antriebswelle
- 24: Kopplungsmechanismus

## Patentansprüche

1. Küchengerät, insbesondere Küchenmaschine (1) oder Standmixer, mit einem Bearbeitungsbehälter (4) zum Aufnehmen eines Bearbeitungsguts und mit mindestens einem in diesem angeordneten Bearbeitungswerkzeug, wobei der Bearbeitungsbehälter (4) eine Zuführöffnung aufweist zum Zuführen von Bearbeitungsgut in den Bearbeitungsbehälter (4), wobei das Küchengerät einen an die Zuführöffnung anschließbaren Dosierbehälter zum dosierbaren Zuführen einer Flüssigkeit (21) in den Bearbeitungsbehälter (4) umfasst und der Dosierbehälter in einem Bodenbereich eine als Durchgangsöffnung ausgebildete Dosieröffnung (17) aufweist, **dadurch gekennzeichnet, dass** die Dosieröffnung (17) mit einer verschiebbaren Lasche (15) verschließbar ist, wobei die Lasche (15) flexibel ausgebildet ist.

2. Küchengerät nach Anspruch 1, **dadurch gekennzeichnet, dass** der Dosierbehälter in die Zuführöffnung des Bearbeitungsbehälters (4) eingesetzt ist.

3. Küchengerät nach Anspruch 1 oder 2, **dadurch gekennzeichnet, dass** die Dosieröffnung (17) trichterförmig ausgebildet ist.

4. Küchengerät nach einem der obigen Ansprüche, **dadurch gekennzeichnet, dass** die Dosieröffnung (17) manuell verschließbar ist.

5. Küchengerät nach einem der vorherigen Ansprüche, **dadurch gekennzeichnet, dass** die Lasche (15) durch zwei parallel zueinander angeordnete Schienen (18, 19) derart verschiebbar geführt ist, dass die Dosieröffnung (17) wahlweise geöffnet oder verschlossen oder teilweise geöffnet werden kann.

6. Küchengerät nach einem der vorherigen Ansprüche, **dadurch gekennzeichnet, dass** die Lasche (15) bis in einen oberen Teil eines Wandbereichs des Dosierbehälters hineinreicht und dort mit einem Griff (16) versehen ist.

7. Küchengerät nach einem der vorherigen Ansprüche, **dadurch gekennzeichnet, dass** die Lasche (15) zumindest im Bereich der Dosieröffnung (17) dicht an einer Unterseite des Bodenbereichs anliegt.

8. Küchengerät nach Anspruch 7, **dadurch gekennzeichnet, dass** die Lasche (15) zumindest im Bereich der Dosieröffnung (17) gegen die Unterseite des Bodenbereichs elastisch vorgespannt ist.

9. Küchengerät nach einem der vorherigen Ansprüche, **dadurch gekennzeichnet, dass** die Lasche (15) entnehmbar ist.

10. Küchengerät nach einem der vorherigen Ansprüche, **dadurch gekennzeichnet, dass** ein Wandbereich des Dosierbehälters zumindest teilweise transparent ausgebildet ist und mit einer Messskala versehen ist.

11. Dosierbehälter zum Anschließen an eine Zuführöffnung eines Küchengeräts (1) zum dosierbaren Zuführen einer Flüssigkeit (21) in dessen Bearbeitungsbehälter (4), wobei der Dosierbehälter in einem Bodenbereich eine als Durchgangsöffnung ausgebildete Dosieröffnung (17) aufweist, **dadurch gekennzeichnet, dass** die Dosieröffnung (17) mit einer verschiebbaren Lasche (15) verschließbar ist, wobei die Lasche (15) flexibel ausgebildet ist.

## Claims

1. Kitchen appliance, in particular a food processor (1) or a blender, having a processing container (4) for receiving a material to be processed and having at least one processing tool arranged therein, wherein the processing container (4) has a feed opening for feeding material to be processed into the processing container (4), wherein the kitchen appliance comprises a dosing container that can be connected to the feed opening for the dosed feeding of a liquid (21) into the processing container (4), and in the bottom portion the dosing container has a dosing opening (17) designed as a through-opening, **characterised in that** the dosing opening (17) can be closed with a displaceable tab (15), wherein the tab (15) is designed to be flexible.

2. Kitchen appliance according to claim 1, **characterised in that** the dosing container is inserted into the feed opening of the processing container (4).

3. Kitchen appliance according to claim 1 or 2, **characterised in that** the dosing opening (17) is designed to be funnel-shaped.

4. Kitchen appliance according to one of the above claims, **characterised in that** the dosing opening (17) is manually lockable.

5. Kitchen appliance according to one of the preceding claims, **characterised in that** the tab (15) is displaceably guided by two rails (18, 19) arranged parallel to one another, such that the dosing opening (17) can optionally be opened or closed or partially opened.

6. Kitchen appliance according to one of the preceding claims, **characterised in that** the tab (15) extends into an upper part of a wall region of the dosing container and is provided there with a handle (16).

7. Kitchen appliance according to one of the preceding claims, **characterised in that** the tab (15) closely abuts an underside of the bottom portion at least in the region of the dosing opening (17).

8. Kitchen appliance according to claim 7, **characterised in that** the tab (15) is resiliently biased against the underside of the bottom portion at least in the region of the dosing opening (17).

9. Kitchen appliance according to one of the preceding claims, **characterised in that** the tab (15) is removable.

10. Kitchen appliance according to one of the preceding claims, **characterised in that** a wall region of the dosing container is designed to be at least partially transparent and is provided with a measurement scale.

11. Dosing container for connection to a feed opening of a kitchen appliance (1) for the dosable feed of a liquid (21) into the processing container (4) thereof, wherein in a bottom portion the dosing container has a dosing opening (17) designed as a through-opening, **characterised in that** the dosing opening (17) can be closed with a displaceable tab (15), wherein the tab (15) is designed to be flexible.

## Revendications

1. Appareil de cuisine, notamment robot culinaire (1) ou mixeur plongeant, comprenant un récipient de transformation (4) destiné à recevoir un produit à transformer et comprenant au moins un outil de transformation disposé dans celui-ci, le récipient de transformation (4) présentant une ouverture d'alimentation destinée à amener un produit à transformer dans le récipient de transformation (4), l'appareil de cuisine comprenant un bol doseur raccordable à l'ouverture d'alimentation pour l'alimentation dosable d'un liquide (21) dans le récipient de transformation (4) et le bol doseur présentant dans une zone de fond une ouverture de dosage (17) réalisée en tant qu'ouverture de passage, **caractérisé en ce que** l'ouverture de dosage (17) peut être fermée par une languette (15) coulissante, la languette (15) étant réalisée de manière flexible.

2. Appareil de cuisine selon la revendication 1, **caractérisé en ce que** le bol doseur est inséré dans l'ouverture d'alimentation du récipient de transformation (4).

3. Appareil de cuisine selon la revendication 1 ou 2, **caractérisé en ce que** l'ouverture de dosage (17) est réalisée en forme d'entonnoir.

4. Appareil de cuisine selon l'une quelconque des revendications ci-dessus, **caractérisé en ce que** l'ouverture de dosage (17) peut être fermée manuellement.

5. Appareil de cuisine selon l'une quelconque des revendications précédentes, **caractérisé en ce que** la languette (15) est guidée de manière déplaçable au moyen de deux rails (18, 19) disposés parallèlement l'un à l'autre, de manière à ce que l'ouverture de dosage (17) puisse être sélectivement ouverte ou fermée ou partiellement ouverte.

6. Appareil de cuisine selon l'une quelconque des revendications précédentes, **caractérisé en ce que** la languette (15) va jusque dans une partie supérieure d'une zone de paroi du bol doseur et y est munie d'une poignée (16).

7. Appareil de cuisine selon l'une quelconque des revendications ci-dessus, **caractérisé en ce que** la languette (15) est étroitement adjacente à un côté inférieur de la zone de fond au moins dans la partie de l'ouverture de dosage (17).

8. Appareil de cuisine selon la revendication 7, **caractérisé en ce que** la languette (15), au moins dans la partie de l'ouverture de dosage (17), est précontrainte de manière élastique contre le côté inférieur de la zone de fond.

9. Appareil de cuisine selon l'une quelconque des revendications précédentes, **caractérisé en ce que** la languette (15) est amovible.

10. Appareil de cuisine selon l'une-quelconque des revendications précédentes, **caractérisé en ce qu'**une zone de paroi du bol doseur est réalisée de manière transparente au moins en partie et est munie d'une graduation.

11. Bol doseur pour le raccordement à une ouverture d'alimentation d'un appareil de cuisine (1) pour l'alimentation dosable d'un liquide (21) dans le récipient de transformation (4) de l'appareil de cuisine, le bol doseur présentant dans une zone de fond une ouverture de dosage (17) réalisée en tant qu'ouverture de passage, **caractérisé en ce que** l'ouverture de dosage (17) peut être fermée par une languette (15) coulissante, la languette (15) étant réalisée de manière flexible.
